Europäisches Patentamt

European Patent Office

Office européen des brevets

(19)

(11) **EP 1 438 728 B1**

(12) **FASCICULE DE BREVET EUROPEEN**

(45) Date de publication et mention
de la délivrance du brevet:
**16.02.2005 Bulletin 2005/07**

(21) Numéro de dépôt: **02790535.5**

(22) Date de dépôt: **23.10.2002**

(51) Int Cl.⁷: $H01G\ 5/00$, $H01G\ 5/16$

(86) Numéro de dépôt international:
**PCT/FR2002/003631**

(87) Numéro de publication internationale:
**WO 2003/036668 (01.05.2003 Gazette 2003/18)**

(54) **MICRO-CONDENSATEUR VARIABLE (MEMS) A FORT RAPPORT ET FAIBLE TENSION D'ACTIONNEMENT**

MIKROEINSTELLBARER KONDENSATOR (MEMS) MIT WEITEM VARIATIONSBEREICH UND NIEDRIGER BETÄTIGUNGSSPANNUNG

MICRO ELECTRO MECHANICAL SYSTEMS (MEMS) WITH VARIABLE HIGH-RATIO AND LOW-VOLTAGE ACTUATION MICRO-CAPACITOR

(84) Etats contractants désignés:
**DE FR GB IT**

(30) Priorité: **25.10.2001 FR 0113796**

(43) Date de publication de la demande:
**21.07.2004 Bulletin 2004/30**

(73) Titulaire: **Commissariat A L'Energie Atomique
75752 Paris (FR)**

(72) Inventeur: **ROBERT, Philippe
F-38100 Grenoble (FR)**

(74) Mandataire: **Poulin, Gérard et al
Société BREVATOME
3, rue du Docteur Lancereaux
75008 Paris (FR)**

(56) Documents cités:
**EP-A- 0 725 408       EP-A- 1 024 508
DE-A- 10 043 758       US-A- 6 034 414**

## Description

### DOMAINE TECHNIQUE

L'invention concerne un micro-condensateur variable, à fort rapport entre capacité maximale et capacité minimale et à faible tension d'actionnement.

L'invention se rapporte donc au domaine des micro-composants passifs, des MEMS (pour Micro-Electro-Mechanical-Systems) et de la radiofréquence.

### ETAT DE LA TECHNIQUE ANTERIEURE

Les micro-condensateurs variables utilisés en téléphonie mobile doivent répondre aux caractéristiques suivantes :

- gamme de variation de capacité : idéalement de 0,5 à 5 pF, soit un rapport entre capacité maximale et capacité minimale de 10 ;
- tension d'alimentation inférieure à 5 V ;
- facteur de qualité : $Q = \dfrac{1}{RC\omega}$ supérieur à 30 ;
- dimensions inférieures à 0,05 mm$^2$ ;
- variation de capacité en fonction de la tension de commande la plus linéaire possible.

Dans le domaine de la micro-électronique, les micro-condensateurs variables conventionnels sont réalisés en silicium ou en AsGa, en utilisant soit des structures à jonction pn, soit des jonctions à barrière Schottky. Ces composants présentent l'inconvénient d'avoir une plage de variation de capacité inférieure à 30% (rapport entre capacité maximale et capacité minimale de 1,3), des pertes résistives élevées et par conséquent un facteur de qualité faible (typiquement inférieur à 10).

Les micro-condensateurs variables MEMS présentent, de par leur conception et leur principe de fonctionnement, un facteur de qualité plus important que les micro-condensateurs variables conventionnels, typiquement supérieur à 30. On peut les classer en deux catégories : ceux où la variation de capacité est due à une variation d'entrefer et ceux où la variation de capacité est due à une variation de surface.

Les micro-condensateurs variables MEMS à variation d'entrefer sont décrits dans l'articles "A Micromachine-Based Low Phase-Noise GHz Voltage-Controlled Oscillator for Wireless Communications" de Darrin J. Young et al, paru dans Transducers'99, 7-10 juin 1999, Sendai, Japon, pages 1386-1389. Ce sont les micro-condensateurs MEMS les plus courants. Un tel système est constitué d'une électrode fixe, disposée sur un substrat, et d'une électrode supportée par des poutres formant ressort et située en regard de l'électrode fixe. Le déplacement de l'électrode mobile se fait suivant la direction de l'entrefer. L'entrefer entre les deux électrodes peut être ajusté par l'application d'une différence de potentiel, ce qui provoque une variation de capacité. Ce système permet d'obtenir des dimensions de 200 μm x 200 μm (soit 0,04 mm$^2$) pour une capacité variant de 2,11 pF pour une différence de potentiel nulle entre les électrodes à 2,46 pF pour une différence de potentiel de 5,5 V.

Ces micro-condensateurs à variation d'entrefer présentent les inconvénients suivants. Du fait de la non-linéarité des forces électrostatiques, la variation d'entrefer doit être limitée au tiers de l'entrefer initial pour éviter que l'électrode mobile ne vienne se coller sur l'électrode fixe. On arrive alors théoriquement à une variation de capacité limitée à 50%. Pour remédier à ce problème tout en conservant le même principe de fonctionnement, un fonctionnement thermique peut être envisagé comme le propose l'article "The réalisation and design considérations of a flip-chip integrated MEMS tunable capacitor" de Kevin F. Harsh et al., paru dans Sensors and Actuators 80 (2000), pages 108-118. Cependant, ce type d'actionnement induit, dans la majorité des applications, une consommation excessive. Un autre inconvénient de ces micro-condensateurs à variation d'entrefer est que la variation de capacité n'est pas linéaire par rapport à la tension de commande. De plus, ce type de composant est sensible aux accélérations (capacité non stable en fonction des accélérations).

Les micro-condensateurs variables MEMS à variation de surface sont basés sur l'utilisation d'un micro-actionneur à peignes interdigités. L'actionneur électrostatique est utilisé pour déplacer une structure en peignes et modifier ainsi le recouvrement de surface de chacune des dents constitutives du micro-condensateur.

Ces micro-condensateurs présentent les inconvénients suivants. Leur tension d'actionnement est élevée. Elle est classiquement comprise entre 80 et 200 V. On peut se reporter à ce sujet à l'article "RF MEMS from a device perspective" de J. Jason Yao paru dans J. Micromech. Microeng. 10 (2000) R9-R38. La surface du composant est importante, typiquement voisine de 1 mm$^2$. Les valeurs de capacité sont faibles (d'environ 30 à 100 fF). En outre, ces composants sont également sensibles aux accélérations et aux chocs.

Les documents US-A-6 034 414 et EP-A-0 725 408 décrivent des micro-condensateurs variables de Type MEMS, ou la variation de capacité est obtenue par variation de distance entre les électrodes.

### EXPOSÉ DE L'INVENTION

Le condensateur variable MEMS selon l'invention permet de remédier aux inconvénients de l'art antérieur. La structure proposée est comparable aux condensateurs à variation d'entrefer (membrane où poutre suspendue au-dessus d'une électrode fixe), mais s'en distingue radicalement par son mode de fonctionnement. En effet, alors que pour les condensateurs de l'art connu, on évite le collage de l'électrode mobile sur l'électrode fixe, dans le cas de l'invention on provoque un collage localisé avec interposition d'une couche diélectrique constituée d'un matériau diélectrique solide avec éventuellement une absence de matériau en certaines zones. C'est alors la surface de collage qui, en fonction de la tension de commande, détermine la variation de capacité.

L'invention a donc pour objet un micro-condensateur MEMS à capacité variable du type à variation d'entrefer, comprenant :

- au moins une électrode fixe disposée sur une face d'un substrat,
- au moins une électrode déformable située en regard de l'électrode fixe,
- des moyens formant couche diélectrique solide interposés entre l'électrode fixe et l'électrode déformable,
- des moyens fléchissant par rapport à ladite face du substrat, comprenant ladite électrode déformable et prévus pour enserrer les moyens formant couche diélectrique entre l'électrode déformable et l'électrode fixe de manière à obtenir une surface de moyens formant couche diélectrique enserrée variable en fonction de la force de fléchissement appliquée,
- des moyens d'application d'une force de fléchissement auxdits moyens fléchissants, destinée à déplacer l'électrode déformable par rapport à l'électrode fixe pour obtenir entre ces électrodes une capacité variable en fonction de la force de fléchissement appliquée,

caractérisé en ce que les moyens d'application d'une force de fléchissement comprennent des premiers moyens pour obtenir une surface des moyens formant couche diélectrique enserrée correspondant à une première valeur de capacité et des deuxièmes moyens pour obtenir une surface des moyens formant couche diélectrique enserrée correspondant à une deuxième valeur de capacité.

Les moyens fléchissants peuvent être choisis parmi une membrane, une poutre fixée par l'une de ses extrémités ou une poutre fixée par ses deux extrémités.

Les moyens formant couche diélectrique peuvent être choisis parmi une couche de matériau diélectrique continue, une couche de matériau diélectrique présentant des trous et un ensemble d'éléments séparés les uns des autres. Ces éléments peuvent comprendre des plots et/ou des bandes.

Les moyens formant couche diélectrique peuvent être solidaires de l'électrode fixe et/ou de l'électrode déformable.

Avantageusement, le substrat est une plaquette de silicium recouverte d'une couche d'oxyde de silicium. les moyens formant couche diélectrique peuvent être en $Si_3N_4$ ou en $SiO_2$ ou en TaON.

Les moyens fléchissants peuvent aussi être prévus pour enserrer une partie des moyens formant couche diélectrique entre l'électrode déformable et l'électrode fixe avant l'application d'une force de fléchissement.

Les moyens d'application d'une force de fléchissement peuvent être choisis parmi des moyens électrostatiques, des moyens électromagnétiques, des moyens thermiques et des moyens piézoélectriques ou par une combinaison de ces moyens. Les moyens d'application d'une force de fléchissement peuvent comprendre des moyens thermiques agissant par effet bilame. Ces moyens thermiques peuvent comprendre au moins une résistance chauffante disposée sur les moyens fléchissants.

L'électrode déformable peut constituer les moyens de fléchissement.

Si les moyens d'application d'une force de fléchissement comprennent des moyens électrostatiques, les premiers moyens pour obtenir une surface des moyens formant couche diélectrique enserrée correspondant à une première valeur de capacité peuvent être constitués d'électrodes d'application d'un champ électrique, les deuxièmes moyens pour obtenir une surface des moyens formant couche diélectrique enserrée correspondant à une deuxième valeur de capacité étant constitués d'électrodes d'application d'un champ électrique.

Avantageusement, ladite électrode fixe et/ou ladite électrode déformable ont une configuration permettant d'obtenir une variation de capacité linéaire en fonction des moyens d'application de la force de fléchissement. Ladite configuration peut consister à donner à une électrode, choisie parmi l'électrode fixe et l'électrode déformable, une largeur restreinte à l'endroit où l'électrode fixe et l'électrode déformable sont d'abord les plus rapprochées, la largeur de cette électrode augmentant en s'éloignant de cet endroit, l'autre électrode parmi l'électrode fixe et l'électrode déformable étant de largeur constante. Si les moyens d'application d'une force de fléchissement comprennent des moyens électrostatiques, ces moyens électrostatiques peuvent comprendre au moins une électrode située à un emplacement laissé libre par la configuration donnée à ladite électrode.

Les moyens fléchissants peuvent être du type multicouche.

L'invention a aussi pour objet un procédé d'obtention d'une capacité variable entre une électrode fixe et une électrode déformable située en regard de l'électrode fixe, des moyens formant couche diélectrique solide étant interposés entre l'électrode fixe et l'électrode déformable, caractérisé en ce qu'il comporte les étapes consistant à :

- enserrer par contact une première surface des moyens formant couche diélectrique solide entre l'électrode fixe et l'électrode déformable, par déformation de l'électrode déformable, pour obtenir une première valeur de capacité,

- enserrer une deuxième surface des moyens formant couche diélectrique solide entre l'électrode fixe et l'électrode déformable, par déformation de l'électrode déformable, pour obtenir une deuxième valeur de capacité.

Avantageusement, la déformation de l'électrode déformable est obtenue par un effet choisi parmi l'effet électrostatique, l'effet électromagnétique, l'effet thermique, l'effet piézoélectrique ou par une combinaison de ces effets.

**BRÈVE DESCRIPTION DES DESSINS**

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1A est une vue schématique et de dessus d'une première variante de micro-condensateur variable selon l'invention,
- la figure 1B est une vue en coupe longitudinale, selon l'axe BB, du micro-condensateur variable de la figure 1A,
- la figure 2 est une vue schématique et de dessus d'une deuxième variante de micro-condensateur variable selon l'invention,
- les figures 3A et 3B sont des vues en coupe longitudinale montrant le fonctionnement d'un micro-condensateur variable selon l'invention,
- la figure 4 est une vue schématique et de dessus d'une troisième variante de micro-condensateur variable selon l'invention,
- la figure 5 est une vue schématique et de dessus d'une quatrième variante de micro-condensateur variable selon l'invention,
- les figures 6A à 6E sont des vues en coupe longitudinale montrant la réalisation d'un micro-condensateur variable selon l'invention à partir d'un substrat en silicium,
- la figure 7 est une vue en coupe longitudinale d'un autre micro-condensateur variable selon l'invention,
- la figure 8 est une vue en coupe longitudinale d'encore un autre micro-condensateur variable selon l'invention.

**DESCRIPTION DETAILLEE DE MODES DE REALISATION DE L'INVENTION**

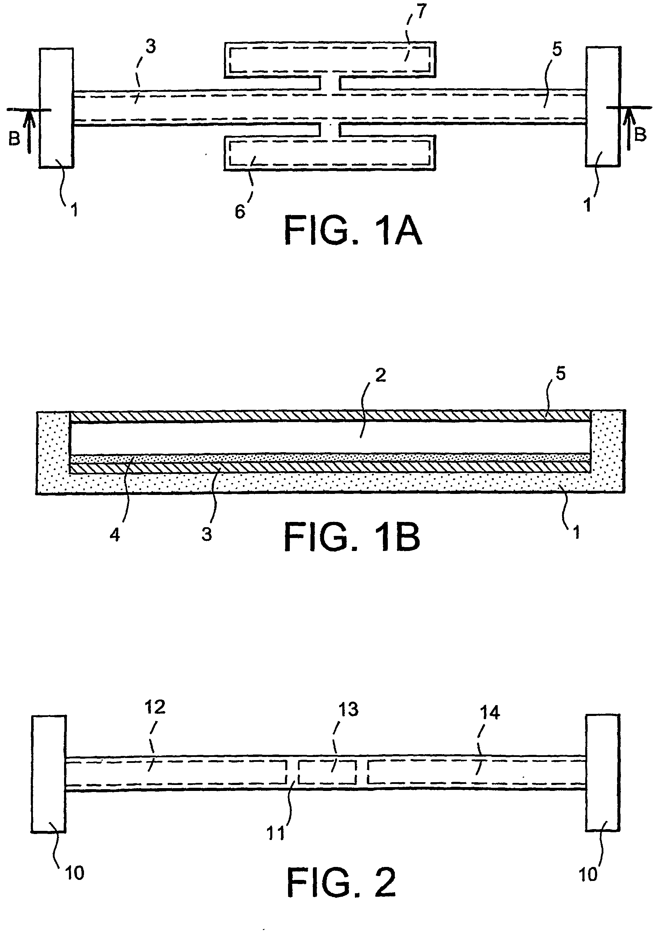

Une première variante de micro-condensateur variable selon l'invention est illustrée par les figures 1A (vue de dessus) et 1B (vue en coupe longitudinale). Le micro-condensateur est fabriqué sur une face isolante d'un substrat 1 à partir de laquelle un évidement 2 a été réalisé. Il comprend une électrode fixe ou intérieure 3 disposée au fond de l'évidement. Une couche de matériau diélectrique 4 est déposée sur l'électrode fixe 3. Au-dessus et à une certaine distance de la couche de matériau diélectrique 4 est disposée une électrode déformable ou supérieure 5 fixée à ses deux extrémités au substrat 1. L'électrode 5 comprend une partie centrale située en regard de l'électrode fixe 3 et deux parties latérales situées de part et d'autre de la partie centrale. La couche de matériau diélectrique 4 permet d'éviter tout court-circuit entre l'électrode déformable 5 et l'électrode fixe 3. Elle assure une fonction capacitive au micro-condensateur.

Deux autres électrodes, référencées 6 et 7, sont disposées au fond de l'évidement 2, de part et d'autre de l'électrode fixe 3. Les électrodes 6 et 7 sont chacune situées en regard de l'une des parties latérales de l'électrode déformable 5. Les électrodes 6 et 7 et les parties latérales de l'électrode déformable 5 servent à l'application d'une force d'attraction électrostatique destinée à rapprocher la partie centrale de l'électrode 5 de l'électrode fixe 3 jusqu'à venir en butée sur la couche de matériau diélectrique 4.

La figure 2 représente, vu de dessus, une deuxième variante de micro-condensateur variable selon l'invention. Cette variante permet d'éviter la présence d'électrodes ou de parties d'électrode en dépassement latéral. L'électrode déformable 11 est fixée par ses deux extrémités au substrat 10 comme précédemment. Elle est constituée d'une simple bande. Au fond de l'évidement et en regard de l'électrode déformable 11 sont disposées trois électrodes alignées, les électrodes 12, 13 et 14. L'électrode 13 est en position centrale et sert, conjointement avec l'électrode déformable 11, à l'application d'une force d'attraction électrostatique destinée à rapprocher la partie centrale de l'électrode 11 du fond de l'évidement. On obtient des micro-condensateurs variables entre d'une part l'électrode déformable 11 et l'électrode fixe 12 et d'autre part entre l'électrode déformable 11 et l'électrode fixe 14. Un micro-condensateur variable unique peut être obtenu en reliant les électrodes 12 et 14 entre elles.

Entre l'électrode déformable 11 et les électrodes fixes 12, 13 et 14 est disposée une couche de matériau diélectrique (non représenté sur la figure 2). Cette couche de matériau diélectrique peut être déposée sur les électrodes fixes et/ou sur l'électrode déformable.

En variante, l'électrode inférieure peut être constituée d'une simple bande et les trois électrodes alignées disposées en regard de l'électrode inférieure. Dans ce cas, ces trois électrodes sont disposées par exemple sur la face inférieure d'une poutre ou d'une membrane.

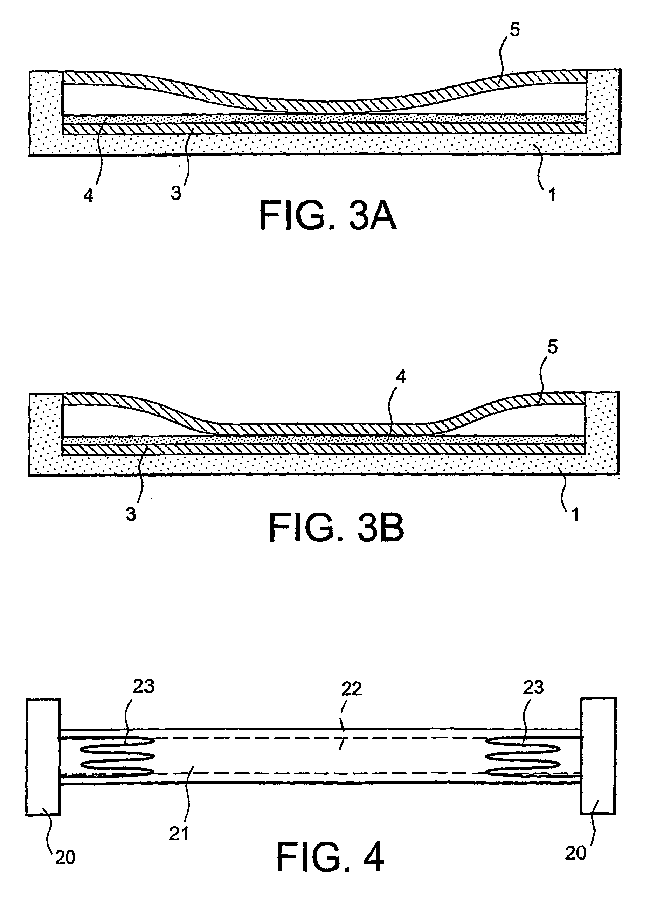

Les figures 3A et 3B illustrent le fonctionnement d'un micro-condensateur variable selon l'invention, par exemple celui représenté aux figures 1A et 1B.

En l'absence de différence de potentiel entre les électrodes, le micro-condensateur est dans l'état représenté à la figure 1B. En fonctionnement, une tension continue appropriée $V_1$ est appliquée entre les électrodes 6 et 7 d'une part et 5 d'autre part (voir la figure 1A). Il en résulte une force d'attraction électrostatique qui plaque la partie centrale de l'électrode déformable 5 sur la couche de matériau diélectrique 4. On obtient alors, entre l'électrode déformable 5 et l'électrode fixe 3, une capacité initiale $C_0$ (voir la figure 3A).

L'application d'une tension continue appropriée $V_2$ entre l'électrode déformable 5 et l'électrode fixe 3 augmente la force d'attraction électrostatique et plaque davantage l'électrode déformable 5 sur la couche de matériau diélectrique 4. On obtient alors, entre l'électrode déformable 5 et l'électrode fixe 3, une capacité C > Co.

Il existe une relation qui relie la capacité C à la tension $V_2$. Cette relation est déterminée par le profil et la répartition des électrodes du micro-condensateur.

La mise en butée de l'électrode déformable sur la couche de matériau diélectrique pour obtenir une valeur de capacité initiale peut être obtenue autrement que par des forces électrostatiques. Cet effet peut être obtenu grâce à des forces électromagnétiques, des forces thermiques (au moyen d'un bilame) ou des forces piézoélectriques.

La figure 4 illustre une autre variante de micro-condensateur variable où la capacité initiale résulte de l'action d'un bilame thermique assisté par l'application de forces électrostatiques. Dans cette vue de dessus, la référence 20 désigne le substrat, la référence 21 désigne l'électrode déformable formant poutre fixée à ses deux extrémités et la référence 21 désigne l'électrode fixe disposée au fond de l'évidement. La couche de matériau diélectrique n'est pas représentée.

Des résistances chauffantes 23 sont disposées sur l'électrode déformable 21 à proximité de ses extrémités. Le passage d'un courant dans les résistances chauffantes 23 induit une élévation locale de la température et un effet bilame qui provoque la déformation de l'électrode déformable 21 pour l'amener jusqu'au contact avec la couche de matériau diélectrique. Une fois l'électrode déformable en contact, son maintien en position déformée peut être assuré uniquement par des forces électrostatiques en utilisant les électrodes 21 et 22. Ceci permet d'éviter une consommation excessive du composant. Cette force électrostatique peut éventuellement être associée à l'effet bilame lors de la phase de déformation et de mise en contact.

L'invention combine plusieurs avantages particulièrement intéressants. Un premier avantage consiste dans l'amplitude de variation de la capacité. Cette amplitude est très importante, typiquement de 0,5 à 5 pF. Ce résultat s'explique par le fait que dans le cas d'une poutre partiellement collée une très faible variation de surface de collage suffit à modifier sensiblement la capacité du micro-condensateur. En effet, la capacité a pour expression :

$$C = \varepsilon_0 \cdot \varepsilon_r \cdot \frac{S}{d}$$

avec $\varepsilon_0$ la permittivité électrique du vide, $\varepsilon_r$ la constante diélectrique de l'isolant, S la surface de collage et d l'épaisseur de l'isolant.

Dans le cas des micro-condensateurs MEMS de l'état de l'art, l'isolant est de l'air ($\varepsilon_r$ vaut donc 1) et d est généralement compris entre 0,5 et 2 $\mu$m. Dans le cas des micro-condensateurs selon l'invention, la capacité est principalement définie par la zone collée, c'est-à-dire la zone où $\varepsilon_r$ = 7,5 dans le cas du nitrure de silicium et où d est voisin de 0,15 $\mu$m. Il est donc clair que l'effet d'une augmentation de la surface de collage sur la capacité est fortement accentué par la forte valeur de $\varepsilon_r$ et la faible valeur de d.

Un deuxième avantage résulte de la faible valeur de la tension d'actionnement du dispositif (inférieure ou égale à 3V). On peut noter à ce sujet, que le collage de l'électrode déformable permet de diminuer très fortement la tension de maintien de la poutre déformée. Les calculs montrent par exemple que, dans le cas d'une poutre où une dizaine de volts sont nécessaires pour coller l'électrode déformable, moins de 2 volts suffisent ensuite à la maintenir en position déformée.

Un troisième avantage résulte de la grande stabilité de la capacité obtenue. En effet, la valeur de la capacité est essentiellement définie par le collage de l'électrode déformable sur l'isolant. Dans cette zone, l'entrefer est fixe et indépendant de toute perturbation extérieure (vibrations, chocs, température...), ce qui rend la capacité parfaitement stable dans le temps.

Un quatrième avantage est que la réalisation du micro-condensateur est compatible avec les procédés de fabrication des circuits intégrés.

Un cinquième avantage provient du faible encombrement du composant obtenu, typiquement 350 $\mu$m x 50 $\mu$m, soit moins de 0,02 mm$^2$.

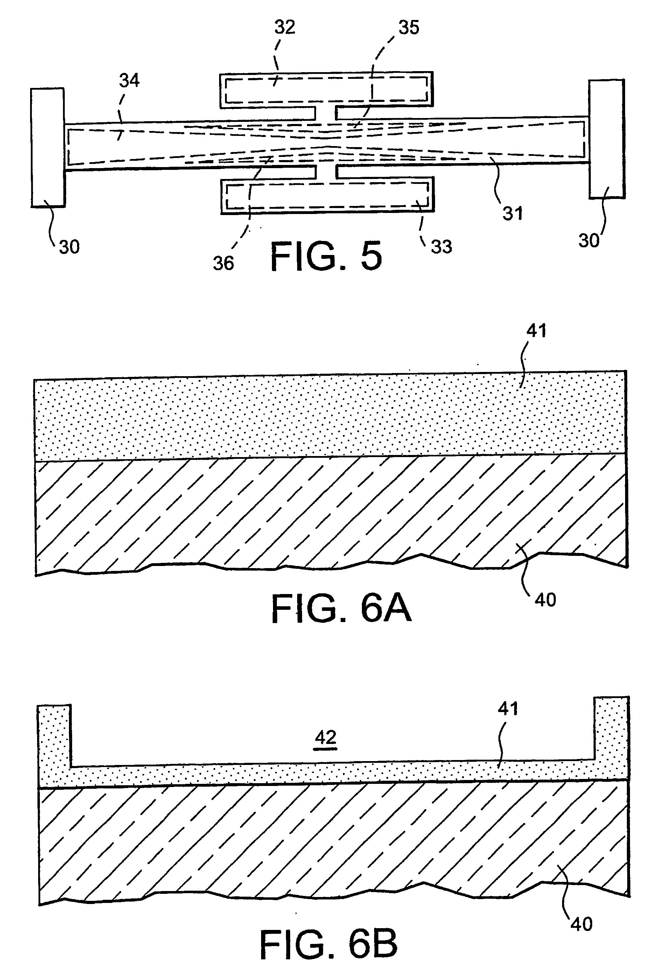

Un sixième avantage est que la loi de variation de la capacité en fonction de la tension appliquée est modifiable par simple redéfinition des électrodes. Ceci peut être mis en évidence par la structure représentée à la figure 5.

La figure 5 illustre un micro-condensateur réalisé à partir d'un substrat 30. Le substrat 30 supporte, au-dessus d'un évidement, les extrémités d'une électrode déformable 31 constituant une poutre. L'électrode déformable 31 comprend, comme le dispositif de la figure 1A, une partie centrale et deux parties latérales. Au fond de l'évidement sont disposées cinq électrodes fixes : les électrodes 32 et 33 disposées chacune en regard de l'une des parties latérales de l'électrode 31 et les électrodes 34, 35 et 36 disposées en regard de l'électrode déformable 31. Une couche de matériau diélectrique non représentée est interposée entre l'électrode déformable 31 et les électrodes 32 à 36. Cette couche de matériau diélectrique est par exemple déposée sur les électrodes 32 à 36. Les électrodes 32 et 33 servent à la mise en contact de l'électrode déformable 31 avec la couche de matériau diélectrique pour obtenir une valeur de capacité initiale. Les électrodes 35 et 36 servent à l'actionnement de l'électrode déformable 31 en vue d'obtenir une valeur de capacité désirée. L'électrode 34 sert également à l'actionnement de l'électrode déformable 31. Elle sert en plus à la définition de la capacité utile du micro-condensateur.

La forme incurvée donnée à l'électrode fixe 34, dont la largeur est minimale au centre du dispositif, et la présence des électrodes d'actionnement 35 et 36 dans la zone laissée libre par le rétrécissement de l'électrode 34 permettent de "linéariser" la variation de capacité en fonction de la tension de commande de capacité utile.

Les figures 6A à 6E illustrent un procédé de réalisation d'un micro-condensateur selon l'invention.

La figure 6A montre un substrat 40 en silicium sur lequel on a fait croître, par oxydation thermique, une couche 41 d'oxyde de silicium de 3 μm d'épaisseur.

Par lithographie et gravure, un évidement 42 de 2 μm de profondeur est créé dans la couche d'oxyde 41 (voir la figure 6B).

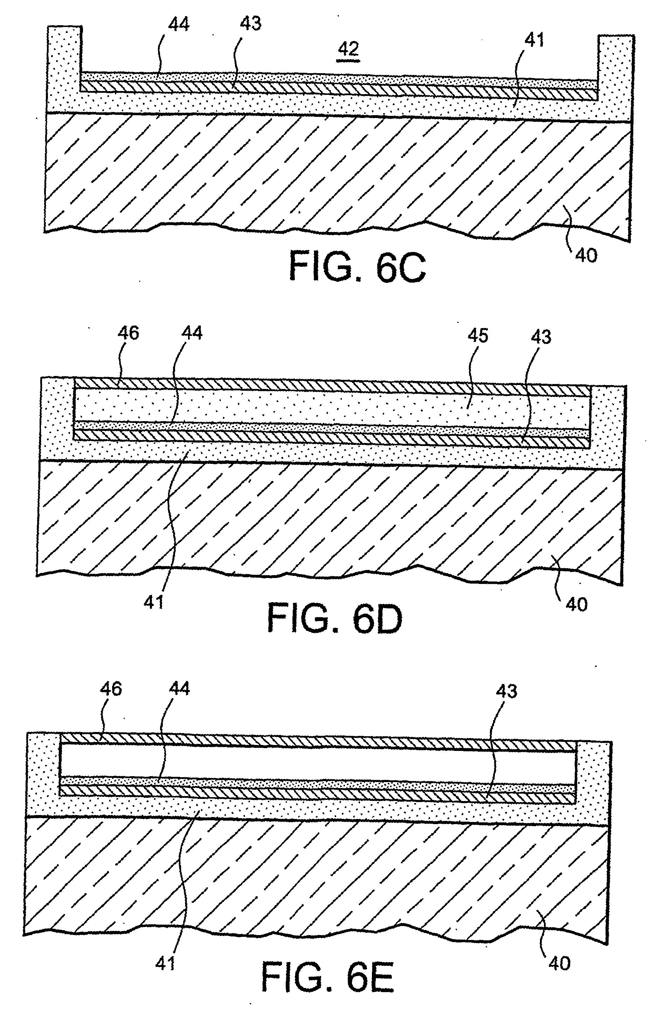

Au fond de l'évidement 42, on dépose une couche d'or 43 de 1 pm d'épaisseur (voir la figure 6C). Par lithographie et gravure, l'électrode fixe ou les électrodes fixes sont définies à partir de cette couche 43. Une couche en nitrure de silicium 44 de 150 nm d'épaisseur est déposée sur l'électrode fixe ou les électrodes fixes.

La figure 6D montre que l'évidement a été comblé par une couche sacrificielle 45 de polymère, par exemple de 1,5 μm d'épaisseur. La couche sacrificielle 45 est planarisée et une couche d'aluminium 46 de 2 μm d'épaisseur est déposée sur la couche sacrificielle 45 planarisée. Par lithographie, on détermine la forme à donner à l'électrode déformable destinée à constituer une poutre. La couche d'aluminium 46 est ensuite gravée pour fournir l'électrode désirée.

La couche sacrificielle est ensuite éliminée comme le montre la figure 6E et la poutre (c'est-à-dire l'électrode déformable) réalisée dans la couche d'aluminium 46 est libérée.

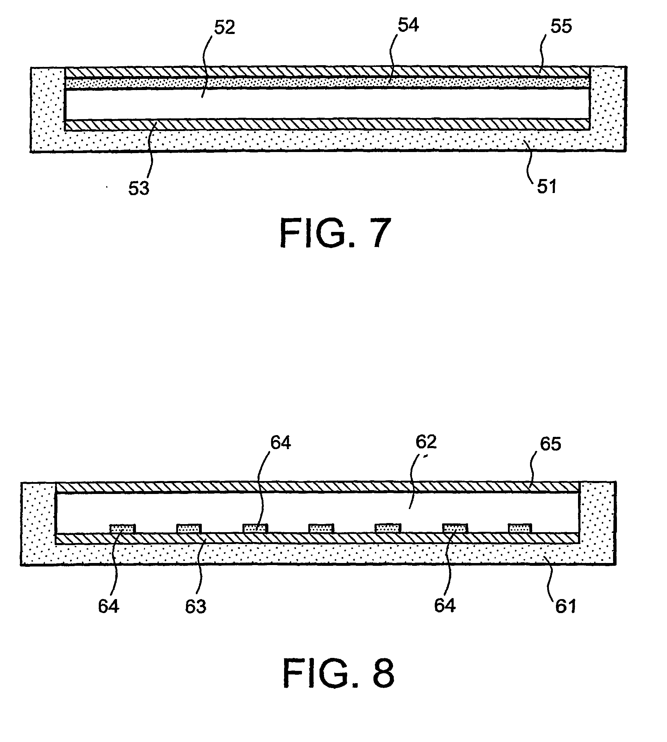

La figure 7 est une vue en coupe longitudinale d'un autre micro-condensateur variable selon l'invention à l'état de repos. Le micro-condensateur est fabriqué sur une face isolante d'un substrat 51 à partir de laquelle un évidement 52 a été réalisé. Il comprend une électrode fixe ou inférieure 53 disposée au fond de l'évidement. Une électrode déformable ou supérieure 55 est fixée par ses deux extrémités au substrat 51. L'électrode déformable 55 supporte sur sa face interne à la structure une couche de matériau diélectrique 54.

La partie déformable du micro-condensateur peut aussi être constituée d'une multicouche comprenant une couche de matériau diélectrique interne à la structure (par exemple en $Si_3N_4$) formant diélectrique pour le micro-condensateur, une couche conductrice (par exemple en or) formant l'électrode déformable et une couche de recouvrement (par exemple en $SiO_2$) externe à la structure.

La figure 8 est une vue en coupe longitudinale d'encore un autre micro-condensateur variable selon l'invention et à l'état de repos. Il est fabriqué sur une face isolante d'un substrat 61 à partir de laquelle un évidement 62 a été réalisé. Il comprend une électrode fixe ou inférieure 63 disposée au fond de l'évidement. Une électrode déformable ou supérieure 65 est fixée par ses deux extrémités au substrat 61. L'électrode fixe 63 supporte un certain nombre d'éléments 64 en matériau diélectrique, par exemple en $Si_3N_4$. Ces éléments 64 peuvent être des plots de forme variée ou des bandes également de forme variée. Ils servent en particulier à éviter un court-circuit entre les électrodes 63 et 65. Ils constituent avec le gaz qui les entoure (par exemple de l'air) le diélectrique du micro-condensateur variable. Ils peuvent être obtenus en déposant d'abord une couche continue de matériau diélectrique, puis en masquant et en gravant cette couche.

Comme pour le micro-condensateur de la figure 7, les éléments en matériau diélectrique peuvent être fixés sur la face de l'électrode déformable interne à la structure.

La présence d'éléments diélectriques en remplacement d'une couche continue a pour avantage de limiter les risques de collage de l'électrode déformable sur le fond de l'évidement, ce collage pouvant être dû à un phénomène de piégeage de charges dans le matériau diélectrique ou à des effets de surface.

Le micro-condensateur variable selon l'invention trouve des applications dans tout composant à capacité variable. On peut citer les filtres de type RLC, les amplificateurs paramétriques à faible bruit, les générateurs de fréquences harmoniques, les contrôleurs de fréquences.

## Revendications

1. Micro-condensateur MEMS à capacité variable du type à variation d'entrefer, comprenant :

   - au moins une électrode fixe (3, 12, 14, 22, 34) disposée sur une face d'un substrat (1, 10, 20, 30),
   - au moins une électrode déformable (5, 11, 21, 31) située en regard de l'électrode fixe,
   - des moyens formant couche diélectrique solide (4) interposés entre l'électrode fixe et l'électrode déformable,
   - des moyens fléchissant par rapport à ladite face du substrat, comprenant ladite électrode déformable et prévus pour enserrer les moyens formant couche diélectrique (4) entre l'électrode déformable et l'électrode fixe de manière à obtenir une surface de moyens formant couche diélectrique enserrée variable en fonction de la force de fléchissement appliquée,

- des moyens d'application d'une force de flé- chissement auxdits moyens fléchissants, des- tinée à déplacer l'électrode déformable par rapport à l'électrode fixe pour obtenir entre ces électrodes une capacité variable en fonction de la force de fléchissement appliquée,

**caractérisé en ce que** les moyens d'application d'une force de fléchissement comprennent des premiers moyens pour obtenir une surface de contact des moyens formant couche diélectriques solide (4) enserrée correspondant à une première valeur de capacité et des deuxièmes moyens pour obtenir une surface de contact des moyens formant couche diélectrique solide (4) enserrée correspondant à une deuxième valeur de capacité.

2. Micro-condensateur selon la revendication 1, **caractérisé en ce que** les moyens fléchissants sont choisis parmi une membrane, une poutre fixée par l'une de ses extrémités ou une poutre fixée par ses deux extrémités.

3. Micro-condensateur selon l'une des revendications 1 ou 2, **caractérisé en ce que** les moyens formant couche diélectrique sont choisis parmi une couche de matériau diélectrique solide continue (4, 44, 54), une couche de matériau diélectrique solide présentant des trous et un ensemble d'éléments (64) séparés les uns des autres.

4. Micro-condensateur selon la revendication 3, **caractérisé en ce que** les éléments (64) comprennent des plots et/ou des bandes.

5. Micro-condensateur selon l'une quelconque des revendications 1 à 4, **caractérisé en ce que** les moyens formant couche diélectrique solide sont solidaires de l'électrode fixe et/ou de l'électrode déformable.

6. Micro-condensateur selon l'une quelconque des revendications 1 à 5, **caractérisé en ce que** le substrat est une plaquette de silicium (40) recouvérte d'une couche d'oxyde de silicium (41).

7. Micro-condensateur selon la revendication 6, **caractérisé en ce que** les moyens formant couche diélectrique sont en $Si_3N_4$ ou en $SiO_2$ ou en TaON.

8. Micro-condensateur selon l'une quelconque des revendications 1 à 7, **caractérisé en ce que** les moyens fléchissants sont prévus pour enserrer par contact une partie des moyens formant couche diélectrique solide entre l'électrode déformable et l'électrode fixe avant l'application d'une force de fléchissement.

9. Micro-condensateur selon l'une quelconque des revendications 1 à 8, **caractérisé en ce que** les moyens d'application d'une force de fléchissement sont choisis parmi des moyens électrostatiques, des moyens électromagnétiques, des moyens thermiques et des moyens piézoélectriques ou par une combinaison de ces moyens.

10. Micro-condensateur selon l'une quelconque des revendications 1 à 9, **caractérisé en ce que** l'électrode déformable (5) constitue les moyens fléchissants.

11. Micro-condensateur selon la revendication 9, **caractérisé en ce que** les moyens d'application d'une force de fléchissement comprennent des moyens thermiques agissant par effet bilame.

12. Micro-condensateur selon la revendication 11, **caractérisé en ce que** les moyens thermiques comprennent au moins une résistance chauffante (23) disposée sur les moyens fléchissants (21).

13. Micro-condensateur selon l'une quelconque des revendications 1 à 10, **caractérisé en ce que** les moyens d'application d'une force de fléchissement comprenant des moyens électrostatiques, les premiers moyens pour obtenir une surface de contact des moyens formant couche diélectrique solide enserrée correspondant à une première valeur de capacité sont constitués d'électrodes (5, 6, 7) d'application d'un champ électrique, les deuxièmes moyens pour obtenir une surface des moyens formant couche diélectrique solide enserrée correspondant à une deuxième valeur de capacité sont constitués d'électrodes (3, 5) d'application d'un champ électrique.

14. Micro-condensateur selon l'une quelconque des revendications 1 à 13, **caractérisé en ce que** ladite électrode fixe (31) et/ou ladite électrode déformable (34) ont une configuration permettant d'obtenir une variation de capacité linéaire en fonction des moyens d'application de la force de fléchissement.

15. Micro-condensateur selon la revendication 14, **caractérisé en ce que** ladite configuration consiste à donner à une électrode (34), choisie parmi l'électrode fixe et l'électrode déformable, une largeur restreinte à l'endroit où l'électrode fixe et l'électrode déformable sont d'abord les plus rapprochées, la largeur de cette électrode (34) augmentant en s'éloignant de cet endroit, l'autre électrode parmi l'électrode fixe et l'électrode déformable étant de largeur constante.

16. Micro-condensateur selon la revendication 15, **caractérisé en ce que**, les moyens d'application d'une force de fléchissement comprenant des moyens électrostatiques, ces moyens électrostatiques comprennent au moins une électrode (35, 36) située à un emplacement laissé libre par la configuration donnée à ladite électrode (34).

17. Micro-condensateur selon l'une quelconque des revendications 1 à 16, **caractérisé en ce que** les moyens fléchissants sont du type multicouche.

18. Procédé d'obtention d'une capacité variable entre une électrode fixe (3, 34, 43, 53, 63) et une électrode déformable (5, 31, 46, 55, 65) située en regard de l'électrode fixe, des moyens formant couche diélectrique solide (4, 44, 54, 64) étant interposés entre l'électrode fixe et l'électrode déformable, **caractérisé en ce qu'**il comporte les étapes consistant à :

   - enserrer par contact une première surface des moyens formant couche diélectrique solide entre l'électrode fixe et l'électrode déformable, par déformation de l'électrode déformable, pour obtenir une première valeur de capacité,
   - enserrer une deuxième surface des moyens formant couche diélectrique solide entre l'électrode fixe et l'électrode déformable, par déformation de l'électrode déformable, pour obtenir une deuxième valeur de capacité.

19. Procédé selon la revendication 18, **caractérisé en ce que** la déformation de l'électrode déformable (5, 31, 46, 55, 56) est obtenue par un effet choisi parmi l'effet électrostatique, l'effet électromagnétique, l'effet thermique, l'effet piézoélectrique ou par une combinaison de ces effets.

**Patentansprüche**

1. Mikrokondensator des Typs MEMS mit durch Spaltveränderung variabler Kapazität, umfassend:

   - wenigstens eine feststehende Elektrode (3, 12, 14, 22, 34), angeordnet auf einer Fläche eines Substrats (1, 10, 20, 30),
   - wenigstens eine verformbare Elektrode (5, 11, 21, 31), der feststehenden Elektrode gegenüberstehend,
   - Mittel zur Bildung einer festen dielektrischen Schicht (4), eingefügt zwischen der feststehenden und der verformbaren Elektrode,
   - biegsame Einrichtungen, bezogen auf die genannte Fläche des Substrats, die genannte verformbare Elektrode umfassend und vorgesehen, die die dielektrische Schicht (4) bildenden Mittel einzuschließen zwischen der verformbaren Elektrode und der feststehenden Elektrode, so dass man eine in Abhängigkeit von der angewendeten Biegekraft variable Oberfläche der die eingeschlossene dielektrische Schicht bildenden Mittel erhält,
   - Einrichtungen zur Anwendung einer Biegekraft auf die genannten biegsamen Einrichtungen, dazu bestimmt, die verformbare Elektrode in Bezug auf die feststehende Elektrode zu verschieben, um zwischen diesen Elektroden eine Kapazität zu erhalten, die in Abhängigkeit von der angewendeten Biegekraft variabel ist,

   **dadurch gekennzeichnet, dass** die Einrichtungen zur Anwendung einer Biegkraft erste Einrichtungen umfassen, um eine Kontaktfläche der die eingeschlossene feste dielektrische Schicht (4) bildenden Mittel herzustellen, die einem ersten Kapazitätswert entspricht, sowie zweite Einrichtungen, um eine Kontaktfläche der die eingeschlossene feste dielektrische Schicht (4) bildenden Mittel herzustellen, die einem zweiten Kapazitätswert entspricht.

2. Mikrokondensator nach Anspruch 1, **dadurch gekennzeichnet, dass** die biegsamen Einrichtungen ausgewählt werden zwischen einer Membran, einem mit einem seiner Enden befestigten Balken oder einem mit seinen beiden Enden befestigten Balken.

3. Mikrokondensator nach einem der Ansprüche 1 oder 2, **dadurch gekennzeichnet, dass** die die dielektrische Schicht bildenden Mittel ausgewählt werden unter einer kontinuierlichen Schicht aus festem dielektrischem Material (4, 44, 54), einer Schicht aus festem dielektrischem Material, die Löcher aufweist, und einer Gruppe von Elementen (64), die voneinander getrennt sind.

4. Mikrokondensator nach Anspruch 3, **dadurch gekennzeichnet, dass** die Elemente (64) Klötzchen und/oder Streifen umfassen.

5. Mikrokondensator nach einem der Ansprüche 1 bis 4, **dadurch gekennzeichnet, dass** die die feste dielektrische Schicht bildenden Mittel mit der feststehenden Elektroden und/oder der verformbaren Elektrode verbunden sind.

6. Mikrokondensator nach einem der Ansprüche 1 bis 5, **dadurch gekennzeichnet, dass** das Substrat eine mit einer Siliciumoxidschicht (41) überzogene Siliciumplatte (40) ist.

7. Mikrokondensator nach Anspruch 6, **dadurch gekennzeichnet, dass** die die dielektrische Schicht bildenden Mittel aus $Si_3N_4$ oder aus $SiO_2$ oder aus TaON sind.

8. Mikrokondensator nach einem der Ansprüche 1 bis 7, **dadurch gekennzeichnet, dass** die biegsamen Einrichtungen vorgesehen sind, um durch Kontakt einen Teil der die feste dielektrische Schicht bildenden Mittel zwischen der verformbaren Elektrode und der feststehenden Elektrode vor der Anwendung einer Biegekraft einzuschließen.

9. Mikrokondensator nach einem der Ansprüche 1 bis 8, **dadurch gekennzeichnet, dass** die Einrichtungen zur Anwendung einer Biegekraft ausgewählt werden unter elektrostatischen Einrichtungen, elektromagnetischen Einrichtungen, thermischen Einrichtungen und piezoelektrischen Einrichtungen oder einer Kombination dieser Einrichtungen.

10. Mikrokondensator nach einem der Ansprüche 1 bis 9, **dadurch gekennzeichnet, dass** die verformbare Elektrode (5) die biegsamen Einrichtungen bildet.

11. Mikrokondensator nach Anspruch 9, **dadurch gekennzeichnet, dass** die Einrichtung zur Anwendung einer Biegkraft thermische Einrichtungen umfassen, die den Bimetalleffekt nutzen.

12. Mikrokondensator nach Anspruch 11, **dadurch gekennzeichnet, dass** die thermischen Einrichtungen wenigstens einen auf den biegsamen Einrichtungen (21) angebrachten Heizwiderstand (23) umfassen.

13. Mikrokondensator nach einem der Ansprüche 1 bis 10, **dadurch gekennzeichnet** wobei die Einrichtungen zur Anwendung einer Biegekraft elektrostatische Einrichtungen umfassen -, dass die ersten Einrichtungen zur Erlangung einer einem ersten Kapazitätswert entsprechenden Kontaktfläche der die eingeschlossene feste dielektrische Schicht bildenden Mittel durch Elektroden (5, 6, 7) zur Anwendung eines elektrischen Feldes gebildet werden, und die zweiten Einrichtungen zur Erlangung einer einem zweiten Kapazitätswert entsprechenden Kontaktfläche der die eingeschlossene feste dielektrische Schicht bildenden Mittel durch Elektroden (3, 5) zur Anwendung eines elektrischen Feldes gebildet werden.

14. Mikrokondensator nach einem der Ansprüche 1 bis 13, **dadurch gekennzeichnet, dass** die genannte feststehende Elektrode (31) und/oder die genannte verformbare Elektrode (34) eine Ausbildung aufweisen, die eine lineare Kapazitätsveränderung in Abhängigkeit von den Biegekraftanwendungseinrichtungen ermöglicht.

15. Mikrokondensator nach Anspruch 14, **dadurch gekennzeichnet, dass** die genannte Ausbildung darin besteht, einer Elektrode (34), ausgewählt zwischen der feststehenden Elektrode und der verformbaren Elektrode, eine Breite zu verleihen, die an der Stelle eingeschränkt ist, wo die feststehende Elektrode und die verformbare Elektrode sich zunächst am nächsten sind, wobei die Breite dieser Elektrode (34) in dem Maße zunimmt, wie sie sich von dieser Stelle entfernt, wobei die jeweils andere Elektrode eine konstante Breite aufweist.

16. Mikrokondensator nach Anspruch 15, **dadurch gekennzeichnet, dass** die Biegekraftanwendungseinrichtungen elektrostatische Einrichtungen umfassen, wobei diese elektrostatischen Einrichtungen wenigstens eine Elektrode (35, 36) umfassen, die sich an einer Stelle befindet, die durch die genannte Ausbildung der Elektrode (34) frei gelassen wird.

17. Mikrokondensator nach einem der Ansprüche 1 bis 16, **dadurch gekennzeichnet, dass** die Biegeeinrichtungen vom Multischicht-Typ sind.

18. Verfahren zur Herstellung einer variablen Kapazität zwischen einer feststehenden Elektrode (3, 34, 43, 53, 63) und einer der feststehenden Elektrode gegenüberstehenden verformbaren Elektrode (5, 31, 46, 55, 65), wobei eine feste dielektrische Schicht (4, 44, 54, 64) bildende Mittel eingefügt sind zwischen der feststehenden Elektrode und der verformbaren Elektrode,
**dadurch gekennzeichnet, dass** es die folgenden Schritte umfasst:

- Einschließen einer ersten Fläche der die feste dielektrische Schicht bildenden Mittel durch Kontakt zwischen der feststehenden Elektrode und der verformbaren Elektrode durch Verformung der verformbaren Elektrode, um einen ersten Kapazitätswert zu erhalten,
- Einschließen einer zweiten Fläche der die feste dielektrische Schicht bildenden Mittel zwischen der feststehenden Elektrode und der verformbaren Elektrode durch Verformung der verformbaren Elektrode, um einen zweiten Kapazitätswert zu erhalten.

19. Verfahren nach Anspruch 18, **dadurch gekennzeichnet, dass** man die Verformung der verformbaren Elektrode (5, 31, 46, 55, 56) durch einen Effekt bewirkt, der ausgewählt wird unter dem elektrostatischen Effekt, dem elektromagnetischen Effekt, dem thermischen Effekt, dem piezoelektrischen Effekt oder einer Kombination dieser Effekte.

## Claims

1. MEMS micro-capacitor of variable capacity of variable air gap type, comprising:

- at least one fixed electrode (3, 12, 14, 22, 34) positioned on one surface of a substrate (1, 10, 20, 30);
- at least one deformable electrode (5, 11, 21, 31) positioned opposite the fixed electrode;
- means forming a solid dielectric layer (4) placed between the fixed electrode and the deformable electrode;
- sagging means with respect to said substrate surface, comprising said deformable electrode and designed to clasp the means forming a dielectric layer (4) between the deformable electrode and the fixed electrode so as to obtain a surface of clasped means forming a dielectric layer variable according to the applied sagging force;
- means for applying a sagging force to said sagging means, intended to move the deformable electrode with respect to the fixed electrode to obtain between these electrodes a variable capacity depending on the applied sagging force,

**characterized in that** the means for applying a sagging force comprises first means to obtain a contact surface of clasped means forming a solid dielectric layer (4) corresponding to a first capacity value and second means to obtain a contact surface of clasped means forming a dielectric layer (4) corresponding to a second capacity value.

2. Micro-capacitor as claimed in claim 1, **characterized in that** the sagging means are chosen from among a membrane, a beam fixed at one of its ends or a beam fixed at both of its ends.

3. Micro-capacitor as claimed in claims 1 or 2, **characterized in that** the means forming a dielectric layer are chosen among a layer of solid, continuous dielectric material (4, 44, 54), a layer of solid dielectric material with holes and a set of elements (64) separated from each other.

4. Micro-capacitor as claimed in claim 3, **characterized in that** the elements (64) comprise contact studs and/or bands.

5. Micro-capacitor as claimed in claims 1 to 4, **characterized in that** the means forming a solid dielectric layer are integral to the fixed electrode and/or the deformable electrode.

6. Micro-capacitor as claimed in claims 1 to 5, **characterized in that** the substrate is a wafer of silicon (40) covered in a layer of silicon dioxide (41).

7. Micro-capacitor as claimed in claim 6, **character-**

**ized in that** the means forming a dielectric layer are in $Si_3N_4$, $SiO_2$ or in TaON.

8. Micro-capacitor as claimed in claims 1 to 7, **characterized in that** the sagging means are envisaged to clasp by contact a part of the means forming a solid dielectric layer between the deformable electrode and the fixed electrode prior to the applying of a sagging force.

9. Micro-capacitor as claimed in claims 1 to 8, **characterized in that** the means for applying a sagging force are chosen among electrostatic means, electromagnetic means, thermal means and piezoelectric means or from a combination of these means.

10. Micro-capacitor as claimed in claims 1 to 9, **characterized in that** the deformable electrode (5) constitutes the sagging means.

11. Micro-capacitor as claimed in claim 9, **characterized in that** the means for applying a sagging force comprises thermal means acting through a bimetal effect.

12. Micro-capacitor as claimed in claim 11, **characterized in that** the thermal means comprises at least one heating resistor (23) positioned on the sagging means (21).

13. Micro-capacitor as claimed in claims 1 to 10, **characterized in that** the means for applying a sagging force comprises electrostatic means, the first means to obtain a contact surface of clasped means forming a solid dielectric layer corresponding to a first capacity value are comprised of electrodes (5, 6, 7) applying an electric field, the second means to obtain a surface of clasped means forming a solid dielectric layer corresponding to a second capacity value being comprised of electrodes (3, 5) applying an electric field.

14. Micro-capacitor as claimed in claims 1 to 13, **characterized in that** said fixed electrode (31) and/or said deformable electrode (34) have a configuration allowing to obtain a linear variation of capacity according to the means for applying the sagging force.

15. Micro-capacitor as claimed in claim 14, **characterized in that** said configuration consists in giving an electrode (34), chosen among the fixed electrode and the deformable electrode, a limited width at the zone where the fixed electrode and the deformable electrode are firstly at their closest, the width of this electrode (34) increasing as it retracts from this zone, the other electrode among the fixed electrode and the deformable electrode being of a constant width.

**16.** Micro-capacitor as claimed in claim 15, **characterized in that** the means for applying a sagging force comprising electrostatic means, these electrostatic means comprise at least one electrode (35, 36) positioned in a space left free by the configuration given to said electrode (34).

**17.** Micro-capacitor as claimed in claim 1 to 16, **characterized in that** the sagging means are of multilayer type.

**18.** Method for obtaining a variable capacity between a fixed electrode (3, 34, 43, 53, 63) and a deformable electrode (5, 31, 46, 55, 65) positioned opposite the fixed electrode, means forming a solid dielectric layer (4, 44, 54, 64) being placed between the fixed electrode and the deformable electrode, **characterized in that** it comprises the following steps:

- clasping by contact a first surface of means forming a solid dielectric layer between the fixed electrode and the deformable electrode, via distortion of the deformable electrode, to obtain a first capacity value;
- clasping a second surface of means forming a solid dielectric layer between the fixed electrode and the deformable electrode, via distortion of the deformable electrode, to obtain a second capacity value.

**19.** Method as claimed in claim 18, **characterized in that** the deformation of the deformable electrode (5, 31, 46, 55, 56) is obtained via an effect chosen among the electrostatic, electromagnetic, thermal or piezoelectric effects or from a combination of these effects.

FIG. 1A

FIG. 1B

FIG. 2

FIG. 3A

FIG. 3B

FIG. 4

FIG. 5

FIG. 6A

FIG. 6B

FIG. 6C

FIG. 6D

FIG. 6E

52    54    55

53    51

# FIG. 7

64    62    65

64    63    64    61

# FIG. 8